Europäisches Patentamt

European Patent Office

Office européen des brevets

(11) Veröffentlichungsnummer: **0 002 243**
B1

(12) EUROPÄISCHE PATENTSCHRIFT

(45) Veröffentlichungstag der Patentschrift:
02.06.82

(51) Int. Cl.³: **C 08 K 5/52**, C 08 L 23/00

(21) Anmeldenummer: 78101457.6

(22) Anmeldetag: 25.11.78

(54) Feste, hydrolysebeständige Phosphorigsäureester-Zubereitungen zum Stabilisieren von Polyolefin-Kunststoffen.

(30) Priorität: 29.11.77 DE 2753136

(43) Veröffentlichungstag der Anmeldung:
13.06.79 Patentblatt 79/12

(45) Bekanntmachung des Hinweises auf die Patenterteilung:
02.06.82 Patentblatt 82/22

(84) Benannte Vertragsstaaten:
BE CH DE FR GB NL SE

(56) Entgegenhaltungen:
DE B 1 706 283
FR A 2 316 242
US A 3 666 700
US A 3 755 200
CHEMICAL ABSTRACTS, Vol. 85, Nr. 47607y, 1976, Columbus, Ohio, USA, MINAGAWA MOTONOBU et al. »Powdered phosphite ester heat stabilizer compositions«, Seite 40, linke Spalte

Die Akte enthält technische Angaben, die nach dem Eingang der Anmeldung eingereicht wurden und die nicht in dieser Patentschrift enthalten sind.

(73) Patentinhaber: HOECHST AKTIENGESELLSCHAFT, Postfach 80 03 20, D-6230 Frankfurt/Main 80 (DE)

(72) Erfinder: Brotz, Walter, Dr., Böhmerwaldstrasse 39, D-8906 Gersthofen (DE)
Erfinder: Mayer, Norbert, Dr., Ziegelgrundweg 17, D-8901 Gablingen (DE)
Erfinder: Pfahler, Gerhard, Dr., Karlsbader Strasse 27, D-8900 Augsburg (DE)
Erfinder: Prinz, Eberhard, Dr., An den Römergärten 23, D-6233 Kelkheim (Taunus) (DE)
Erfinder: Wiezer, Hartmut, Dr., Hans-Fischer-Strasse 6, D-8906 Gersthofen (DE)

0 002 243

### Feste, hydrolysebeständige Phosphorigsäureester-Zubereitungen zum Stabilisieren von Polyolefin-Kunststoffen

Phosphorigsäureester gewinnen in steigendem Maße als Antioxidantien in Stabilisatorsystemen für Kunststoffe, besonders für die Massenprodukte Polyäthylen, Polypropylen und PVC Bedeutung. Wegen der leichteren Dosier- und Mischbarkeit mit dem Kunststoff, aber auch mit den anderen Komponenten der Gesamtstabilisierung werden feste Produkte in Pulver- oder Schuppenform den flüssigen vorgezogen. Ihr gravierender Nachteil ist jedoch, daß sie in feuchter Luft, schon teilweise in der Verpackung, beim Versand an den Verbraucher ganz besonders aber beim Lagern und Öffnen derselben rasch hydrolysieren und dabei ihre Wirkung als Stabilisator verlieren. Die Hydrolyseprodukte reagieren dann mit anderen Bestandteilen des Stabilisatorsystems, wie Metallseifen, zu unlöslichen Verbindungen, die den Kunststoff trüben und so den Produktionsablauf empfindlich stören können, wenn nicht gar ihn unterbrechen.

Der vorliegenden Erfindung lag nun die Aufgabe zugrunde, diese Nachteile der festen Phosphorigsäureester zu eliminieren und deren Hydrolyse zu verhindern bzw. stark zu verringern, ohne ihre Wirksamkeit zu beeinträchtigen.

Es hat in der Vergangenheit nicht an Versuchen gefehlt, die Hydrolysestabilität von Phosphorigsäureester-Stabilisatoren zu verbessern. So wird in der DE-OS 2 626 225 einen schon früher vorgeschlagenen Zusatz von geringen Mengen eines Amins hingewiesen, wobei aber neben einer nur kurzzeitigen Wirkung überaus unangenehme Verfärbungen auftreten können, wenn das nach diesem Verfahren behandelte Phosphit z. B. in PVC verwendet wird.

In derselben Offenlegungsschrift wird als geeignetere Maßnahme empfohlen, Metallsalze organischer Säuren zuzusetzen, wodurch sich jedoch die Hydrolyse nicht verhindern läßt, sondern nur deren Folgen, die z. B. an der PH-Erniedrigung sichtbar werden, zu bekämpfen sind. Diese Maßnahme schließt somit die oben genannten Erscheinungen der Siebverstopfung beim Verarbeiten des Kunststoffes und dessen Trübung nicht aus.

In der JP-PS 76 37 136 ist eine pulverisierbare Kombination aus 100 Teilen Phosphit und 5 bis 100 Teilen eines niedermolekularen Poly-$\alpha$-Olefins oder eines höheren Alkylketons wie Stearon oder Lauron beschrieben, welche eine verbesserte Hydrolysefestigkeit und eine verringerte Neigung zum Zusammenbacken unter Wärme- und Druckeinwirkung besitzen soll. Nachteilig bei diesem Präparat ist, daß es in PVC Trübungen verursacht und in Polyolefinen bei der Spritzgußverarbeitung keine die Verarbeitbarkeit erleichternde Wirksamkeit besitzt.

Es wurde nun gefunden, daß man die Hydrolyse von festen Phosphorigsäureestern weitestgehend verhindern und darüber hinaus ihre stabilisierende Wirkung in Kunststoffen erheblich steigern kann, wenn man sie mit stark hydrophoben Wachsen kombiniert.

Die Erfindung betrifft somit feste Phosphorigsäureester-Zubereitungen mit verbesserter Stabilisatorwirkung in Polyolefin-Kunststoffen, bestehend aus 20 bis 97 Gew.-% von als Stabilisatoren für Polyolefinkunststoffe an sich bekannten Phosphorigsäureestern und 80 bis 3 Gew.-% eines Wachses aus der Gruppe natürliche oder teilsynthetische Esterwachse, Amidwachse, Ester von Polyolefinwachsoxidaten sowie wachsartige Ester von langkettigen Phosphonsäuren.

Die erfindungsgemäßen Zubereitungen zeichnen sich durch ihre hervorragende Hydrolysestabilität aus sowie die außerordentlich überraschende Tatsache, daß sie besser stabilisieren als das reine Phosphit. Dies war nicht zu erwarten, nachdem die zuzusetzenden Wachse selbst keinerlei stabilisierende Wirksamkeit auf Kunststoffe ausüben. Diese Steigerung der stabilisierenden Wirksamkeit ließ sich keineswegs vorhersehen, denn durch den Wachszusatz wird ja der Gehalt an stabilisierend wirkenden Phosphitgruppen durch Verdünnung vermindert. Um so mehr erstaunt, daß durch diesen Verdünnungseffekt nicht nur die Stabilisatorwirkung nicht geringer wird, sondern darüber hinaus z. T. sogar noch eine drastische Verbesserung derselben zu beobachten ist. Es scheint somit ein gewisser Synergismus zwischen Phosphorigsäureester und Wachs vorzuliegen.

Die bei den erfindungsgemäß mit Wachs kombinierten Phosphiten feststellbare Wirksamkeitssteigerung erstreckt sich sowohl auf die Verarbeitungsstabilität als auch auf die Langzeitstabilität des Kunststoffes. So wird z. B. der bei Mehrfachextrusion des Kunststoffes eintretende Viskositätsabfall erheblich verzögert, wenn man statt des reinen Phosphits die gleiche Gewichtsmenge einer Mischungen aus Wachs und Phosphit dem Kunststoff zusetzt.

Ein ebenso günstiger Einfluß ist in der Langzeitstabilität des Kunststoffes zu beobachten. Auch hier tritt eine wesentliche Steigerung der Wärmealterungsbeständigkeit auf, wenn man statt des reinen Phosphits eine gleichgewichtige Kombination aus Phosphit und Wachs einsetzt.

Durch die Verwendung der erfindungsgemäßen Phosphorigsäureester-Zubereitungen läßt sich somit das teure Phosphit zum Teil durch das wesentlich billigere Wachs ersetzen und dabei noch eine Steigerung der Stabilisatorwirkung erzielen. Dieser Effekt ist ebenfalls ein wesentlicher Vorteil.

Ein weiterer Vorteil der Phosphitesterzubereitungen ist ihre beschleunigte Verteilung im Kunststoff bei der Verarbeitung. Dieser Effekt wird naturgemäß bei hochschmelzenden Phosphitverbindungen besonders deutlich, er spielt aber auch bei niedriger schmelzenden Phosphiten eine vorteilhafte Rolle. Daß durch die Kombination von Wachs mit einem Phosphitstabilisator eine schnellere und gründlichere Verteilung im Kunststoff erzielt wird, konnte gleichfalls nicht vorausgesehen werden.

2

Schließlich ist in manchen Fällen durch Zusatz von wenigen Gewichtsprozent Wachs zum Phosphit eine deutliche Erhöhung des Schmelzpunktes zu beobachten. Dieser Effekt ist überraschend, da normalerweise bei Verunreinigung einer Substanz deren Schmelzpunkt absinkt. Die Schmelzpunkterhöhung ist insbesondere dann von Vorteil, wenn das Phosphit zur sog. Bunker-Stabilisierung von Polyolefinpulver eingesetzt werden soll. Bei diesem Prozeß fällt das Kunststoffpulver aus der Polymerisation mit einer Temperatur von ca. 60 bis 80°C an. Stabilisatormischungen, welche ein niedriger schmelzendes Phosphit enthalten, verbacken bei dieser Temperatur und können dann nur mit viel höherem Aufwand homogen im Kunststoffpulver verteilt werden. Dieser Nachteil läßt sich bei Einsatz von durch Wachszusatz im Erstarrungspunkt erhöhten Phosphiten vermeiden. Solche Phosphite sind weiterhin leichter durch Sprühen oder Schuppen zu konfektionieren, außerdem neigen sie bei Einwirkung von Wärme und Druck weniger zum Verbacken als unbehandelte Phosphite.

Überraschend ist weiterhin, daß durch den Wachszusatz die Flüchtigkeit der Phosphite in der Wärme drastisch reduziert, ja bei höherem Wachsanteil fast gänzlich unterdrückt wird. Dieser Effekt ist deshalb von großer Bedeutung, weil dadurch gewährleistet wird, daß während der Verarbeitung des Kunststoffs anwesende Personen nicht evtl. gesundheitsschädlichen Dämpfen ausgesetzt sind.

Unter für die Stabilisierung von Kunststoffen an sich bekannten Phosphorigsäureestern werden feste, organische Phosphite, wie z. B. Di-Stearylphosphit, Tri-Stearylphosphit, vorzugsweise Pentaerythritylphosphite, wie sie z. B. in den DE-OS 2 219 695, 2 347 997, 2 621 323, 2 630 257, 2 431 623 und den DE-PS 1 237 312 und 2 505 152 beschrieben sind, Zuckeralkoholphosphite gemäß den DE-OS 2 633 392, 2 633 393 sowie feste Triarylphosphite nach DE-OS 2 606 358 verstanden. Bei den letztgenannten läßt sich der gelegentlich unerwünscht hohe Schmelzpunkt durch den Wachszusatz absenken sowie die besonders starke Sublimationstendenz dieser Substanzen bei hohen Temperaturen reduzieren.

Erfindungsgemäß einzusetzende, unter die allgemeine Definition des Begriffes Wachse nach DGF Einheitsmethoden MI 1 (75) fallende Produkte besitzen 20 bis ca. 500, vorzugsweise zwischen 30 und 250 C-Atome im Molekül und gehören nachstehenden Gruppen an:

a) Natürliche Esterwachse, z. B. natürliche Pflanzen- und Insektenwachse wie Carnaubawachs oder Candelillawachs,
b) teilsynthetische Esterwachse wie z. B. Montanwachsderivate,
c) Amidwachse, z. B. Distearoyl-ethylethylen-diamid,
d) Ester von Polyolefinwachsoxidaten sowie
e) wachsartige Ester langkettiger Phosphonsäuren, welche durch Addition von Dialkylphosphiten an langkettige $\alpha$-Olefine in Gegenwart Radikale liefernder Katalysatoren zugänglich sind.

Auch Gemische der genannten Wachse untereinander sowie mit Polyolefinwachsen können verwendet werden. Bevorzugt werden Aufbau-Polyethylenwachse in Mischung mit Amidwachsen, insbesondere Amidwachse allein. In den erfindungsgemäßen Wachs-Phosphorigsäureester-Zubereitungen soll der Anteil des Wachses zwischen 3 und 80, vorzugsweise zwischen 5 und 40% betragen.

Die Herstellung der Zubereitungen erfolgt bevorzugt in der Weise, daß man das Wachs und den festen Phosphorigsäureester zusammen aufschmilzt. Die Schmelze wird dann nach an sich bekannten Verfahren konfektioniert, z. B. durch Schuppen, durch Versprühen, durch Schleudern oder nach dem Erkaltenlassen durch Mahlen. Der Wachs-Phosphit-Schmelze können auch einzelne oder alle Teile eines Gesamtstabilisatorsystems wie phenolische Antioxidantien, z. B. substituierte tertiär-Butylphenole, organische Sulfide, wie z. B. Thioglykolsäureester oder Distearylsulfid, Metallsalze von Fettsäuren, wie z. B. Stearate, Laurate, oder Montanate des Calciums, Bariums, Magnesiums, Cadmiums, Zinks und Bleis, sowie Lichtstabilisatoren wie Benzophenone, Triazole oder gehinderte Amine zugefügt werden. Da diese Stabilisatoren oft einen wachsartigen Charakter besitzen, können sie die hydrolyseverhindernde Wirkung des Wachses noch verstärken. Aus der Reihe der Wachstypen wählt man für den Fall eines Gesamtstabilisatorsystems dasjenige Individuum aus, das die Homogenität der Schmelze der Gesamtmischung gewährleistet. Bei dieser Verfahrensweise erzielt man den zusätzlichen Vorteil, später sämtliche Stabilisatoren in einer Operation in den Kunststoff einmischen zu können.

Eine andere Möglichkeit, die Zubereitungen herzustellen besteht darin, diskrete Partikel des zu schützenden Phosphorigsäureesters durch Einhüllen mit einem Wachsfilm zu überziehen. Dies kann beispielsweise dadurch geschehen, daß während oder nach dem Sprühen oder Schuppen des Phosphits das Wachs als Schmelze oder in einem Lösungsmittel gelöst auf die Phosphitpartikel aufgetragen wird.

Die Zubereitungen gemäß der Erfindung werden zum Stabilisieren von Kunststoffmassen auf der Basis von Polyolefinen oder von chlorhaltigen Polymeren gegen den schädigenden Einfluß von Licht und Wärme eingesetzt, und zwar in Mengen von 0,01 bis 5, vorzugsweise 0,05 bis 2 Gew.-%, bezogen auf die Kunststoffmasse und den Phosphorigsäureester-Anteil in der Zubereitung. Genannt seien im einzelnen Massen aus Polyäthylen, bevorzugt Polypropylen, Copolymerisaten von Äthylen mit $C_3$- bis $C_5$-$\alpha$-Olefinen, Polyvinylchlorid, dessen Copolymerisaten mit Vinylidenchlorid und anderen Olefinen, chlorierten Polyolefinen, sowie aus Mischungen von Polymerisaten.
Die folgenden Beispiele sollen die Erfindung noch näher erläutert:

## Beispiel 1

a) 18 g Di-stearyl-pentaerythrityl-diphosphit werden in eine ca. 50°C warme Lösung von 2 g Triacontylphosphonsäuredimethylester in Heptan eingerührt, bei 30°C wird das Lösungsmittel im Rotationsverdampfer entfernt.

b) 20 g Di-stearyl-pentaerythrityl-diphosphit werden in eine Schmelze von 20 g Triacontylphosphonsäuredimethylester eingerührt. Die Schmelze wird geschuppt.

## Beispiel 2

Das Beispiel zeigt die verbesserte Hydrolysefestigkeit von erfindungsgemäßen Phosphitzubereitungen.

a) 5 g der nach Beispiel 1b gewonnenen Substanz werden in 100 ml entsalztem Wasser 20 Minuten am Rückfluß gekocht. Es wird noch heiß durch ein Faltenfilter filtriert. Aus der wäßrigen Phase wird eine 40-ml-Probe entnommen und mit 0,1 m KOH gegen Bromphenolblau titriert. Der Hydrolysegrad ergibt sich als Quotient aus tatsächlichem Laugeverbrauch und theoretisch möglichem Laugeverbrauch bei vollständiger Hydrolyse. Er betrug 7% der Theorie.
Unter denselben Bedingungen geprüft zeigte das reine Di-stearyl-pentaerythrityl-diphosphit einen Hydrolysegrad von 51% d. Th.

b) Wasseraufnahme einer erfindungsgemäßen Phosphorigsäureester-Zubereitung im Vergleich zur Wasseraufnahme des zugrundeliegenden Phosphorigsäureesters bei Lagerung in Wasserdampfgesättigter Atmosphäre.

Phosphit: Di-stearyl-pentaerythrityl-diphosphit
Prüfkörper: Kreisplättchen $\varnothing$ = 60 mm, Höhe = 5 mm
Lufttemperatur: 20°C
Luftfeuchtigkeit: 100%
Dauer: 24 Stunden

| Zusammensetzung des Prüfkörpers | Wasseraufnahme in % des Prüfkörpergewichts |
|---|---|
| 70% Phosphit  30% Amidwachs*) | 1,0 |
| 50% Phosphit  50% Amidwachs*) | 1,0 |

*) Distearoyläthylendiamid.

## Beispiel 3

In diesem Beispiel soll die verbesserte Wirksamkeit der Phosphit-Zubereitungen gegenüber den zugrundeliegenden Phosphiten aufgezeigt werden. Aus den Meßwerten ist ersichtlich, daß durch die erfindungsgemäßen Zubereitungen eine erhebliche Steigerung sowohl der Wärmealterungsbeständigkeit als auch der Verarbeitungsbeständigkeit zu erzielen ist, obwohl der Phosphitgehalt stets niedriger liegt als bei den Vergleichsversuchen.

a) Prüfung der Wärmealterungsbeständigkeit Auf der Zweiwalze wird eine Mischung aus

4

0 002 243

100 Gew.-Teilen   unstabilisiertem Polypropylenpulver der Dichte 0,90 (Schmelzindex ist ca. 6 g/10 Min., bestimmt in Anlehnung an ASTM D 1238-62 T),

0,15 Gew.-Teilen   3',5'-Di-tert.-butyl-4'-hydroxyphenyl-propionsäure-octacedylester und

je 0,1 Gew.-Teilen eines Phosphits bzw. einer Phosphitzubereitung bei 200°C fünf Minuten lang homogenisiert. Die Kunststoffschmelze wird sodann bei 200°C zu einer Platte von 1 mm Dicke gepreßt. Aus der erkalteten Platte werden streifenförmige Prüfkörper ($60 \times 10 \times 1$ mm) ausgestanzt und in einem Umlufttrockenschrank an ein motorgetriebenes Gestell mit rotierenden Horden gehängt. Die Proben werden in kontrollierter Atmosphäre (Frischluftzufuhr mit definierter Menge) einer gleichmäßigen Temperaturbelastung von 140°C Lufttemperatur unterworfen. Als Endpunkt gilt die Zeitspanne, bei der an einigen Stellen eine beginnende lokale Versprödung eintritt, nach DIN 53 383 gekennzeichnet durch die Bildung verfärbter, trüber, teilweise abbröckelnder Stellen. In der nachstehenden Tabelle ist diese Zeitspanne in Tagen angegeben.

b)   Prüfung der Verarbeitungsbeständigkeit

Von der unter a) beschriebenen Mischung wurde der Schmelzindex ($i_{2/300}$) vor und nach einer 60minütigen thermischen Belastung bei 300°C bestimmt. In der Tabelle ist der Quotient der so ermittelten Schmelzindexweite $\dfrac{i\ vor}{i\ nach}$ angegeben. Je kleiner dieser Quotient ist, um so größer ist der erlittene thermische Abbau der Kunststoffschmelze, um so geringer somit ihre Verarbeitungsstabilität.

| Phosphit nach Beispiel | Wärmealterungs-beständigkeit (Tage) | Verarbeitungsstabilität $\dfrac{i\ vor}{i\ nach}$ |
|---|---|---|
| 1 a | 57 | 0,227 |
| 1 b | 51 | 0,218 |
| Di-stearylpentaerythritylphosphit (Vergleich) | 43 | 0,144 |

**Patentansprüche**

1. Feste Phosphorigsäureester-Zubereitungen mit verbesserter Stabilisatorwirkung in Polyolefin-Kunststoffen, bestehend aus 20 bis 97 Gew.-% von als Stabilisatoren für Polyolefinkunststoffe an sich bekannten Phosphorigsäureestern und 80 bis 3 Gew.-% eines Wachses aus der Gruppe natürliche oder teilsynthetische Esterwachse, Amidwachse, Ester von Polyolefinwachsoxidaten sowie wachsartige Ester von langkettigen Phosphonsäuren.

2. Zubereitungen nach Anspruch 1, dadurch gekennzeichnet, daß das Wachs Distearoylethylendiamid ist.

3. Zubereitungen nach Anspruch 1 oder 2, dadurch gekennzeichnet, daß ein Polyolefinwachs Bestandteil der Wachskomponente ist.

4. Zubereitungen nach den Ansprüchen 1 bis 3, dadurch gekennzeichnet, daß sie zusätzlich weitere Komponenten eines Stabilisatorsystems für Polyolefine enthalten.

**Claims**

1. Solid phosphorous acid ester preparations having an improved stabilizing effect in polyolefin plastic materials, comprising from 20 to 97 weight % of a known, solid organic phosphorous acid ester stabilizer for a plastic material, and from 80 to 3 weight % of a wax selected from the group consisting of natural or partially synthetic ester waxes, amide waxes, esters of polyolefinwax oxidates and wax-like esters of long chain phosphonic acids.

2. Preparations as claimed in claim 1, in which the wax is distearoylethylenediamide.

3. Preparations as claimed in claims 1 or 2 in which a polyolefin wax is ingredient of the wax component.

5

**0 002 243**

4. Preparations as claimed in claims 1 to 3, in which other components of a stabilizing system for polyolefins are added thereto.

**Revendications**

1. Compositions solides à base d'esters de l'acide phosphoreux, qui ont une action stabilisante améliorée dans des matières plastiques polyoléfiniques, compositions qui sont constituées de 20 à 97% en poids d'esters de l'acide phosphoreux connus en tant que stabilisants de matières plastiques polyoléfiniques et de 80 à 3% en poids d'une cire prise dans l'ensemble constitué par les cires d'esters naturelles ou partiellement synthétiques, les cires d'amides, les esters de produits d'oxydation de cires de polyoléfines ainsi que les esters cireux d'acides phosphoniques à longue chaîne.

2. Compositions selon la revendication 1, caractérisées en ce que la cire est le distéaroyl-éthylène-diamide.

3. Compositions selon l'une des revendications 1 et 2, caractérisées en ce qu'une cire de polyoléfine est un constituant de la composante cire.

4. Compositions selon l'une quelconque des revendications 1 à 3, caractérisées en ce qu'elles contiennent en outre d'autres composantes d'un système stabilisant pour polyoléfines.